# EUROPEAN PATENT APPLICATION

(11) **EP 4 546 684 A2**
(43) Date of publication of application: **30.04.2025**
(21) Application number: 24220190.3
(22) Date of filing: 18.01.2019
(51) Int. Cl.: H04L 1/1607

(54) **DATA ACKNOWLEDGMENT METHOD AND APPARATUS**

(30) Priority: 07.03.2018 CN 201810187153
(62) Divisional of application: 19763352.2
(71) Applicant: Huawei Digital Power Technologies Co., Ltd., Shenzhen, Guangdong 518129 (CN)
(72) Inventor: HUANG, Guogang, Shenzhen, 518129 (CN); LI, Yunbo, Shenzhen, 518129 (CN); GUO, Yuchen, Shenzhen, 518129 (CN); LIANG, Dandan, Shenzhen, 518129 (CN); YU, Jian, Shenzhen, 518129 (CN)
(74) Representative: Goddar, Heinz J.

(57) **Abstract**

Embodiments of this application relate to the communications field, and in particular, to a data acknowledgment method and apparatus in the communications field. The method includes: sending, by a STA, a data frame; and sending, by the STA, an acknowledgment request after X duration from end of sending the data frame, where the X duration is greater than or equal to a transmission delay on a backhaul link between APs, and the acknowledgment request is an acknowledgment request for the data frame. In the embodiments of this application, the STA sends the acknowledgment request after the X duration from the end of sending the data frame. The X duration is greater than or equal to the transmission delay on the backhaul link between the APs, so that acknowledgment of AP-side uplink joint reception is completed without wasting air interface resources.

## Description

This application claims priority to Chinese Patent Application No. 201810187153.X, filed with the China National Intellectual Property Administration on March 7, 2018 and entitled "DATA ACKNOWLEDGMENT METHOD AND APPARATUS", which is incorporated herein by reference in its entirety.

### TECHNICAL FIELD

Embodiments of this application relate to the communications field, and in particular, to a data acknowledgment method and apparatus in the communications field.

### BACKGROUND

In an outdoor scenario such as a high-speed railway or a highway, power of a STA is usually relatively low relative to that of an AP. Therefore, a STA usually cannot correctly send uplink data to an AP that belongs to the STA. In this case, a plurality of APs need to simultaneously receive uplink data sent by the STA, and perform sharing acknowledgment on the received uplink data, thereby improving transmission accuracy and transmission efficiency of the uplink data.

Data is transmitted by using an air interface in a WLAN. The data may not to be successively received by a receiver due to interference and a poor channel condition. To determine whether the data is successfully received by the receiver, an acknowledgment mechanism is introduced into the 802.11 standard.

Therefore, in the foregoing communication scenario, how to acknowledge received data during uplink joint reception is a problem urgently to be resolved.

### SUMMARY

Embodiments of this application provide a data acknowledgment method and apparatus, so that AP-side uplink data joint reception is completed without wasting air interface resources.

According to a first aspect, an embodiment of this application provides a data acknowledgment method, including:
sending, by a STA, a data frame; and
sending, by the STA, an acknowledgment request after X duration from end of sending the data frame, where the X duration is greater than or equal to a transmission delay on a backhaul link between APs, and the acknowledgment request is an acknowledgment request for the data frame.

It should be understood that the STA first sends the data frame, and then sends the acknowledgment request after the X duration from the end of sending the data frame. The X duration is greater than or equal to the transmission delay on the backhaul link between the APs.

After sending the data frame, the STA reserves at least the duration (the transmission delay on the backhaul link between the APs), and then sends the acknowledgment request, so that an AP 1 and an AP 2 have enough time to perform data acknowledgment. Therefore, the AP 1 or the AP 2 can reply to the acknowledgment request sent by the STA. In this way, AP-side uplink joint reception is completed without introducing data padding and wasting air interface resources.

In a first possible implementation of the first aspect, the data frame carries indication information used to indicate uplink joint reception.

In the first possible implementation of the first aspect, a possible implementation is that the indication information includes an RA field whose value is a MAC address of a virtual coordinated AP and that is in the data frame, or a 1-bit uplink joint reception indicator bit in the data frame.

In a second possible implementation of the first aspect, before the sending, by a STA, a data frame, the method further includes: receiving, by the STA, a beacon, where the beacon includes a MAC address of an AP, a MAC address of a virtual coordinated AP to which the AP belongs, and the transmission delay on the backhaul link between the APs.

According to a second aspect, an embodiment of this application provides a data acknowledgment method, including:
receiving, by an AP, a data frame; and
receiving, by the AP, an acknowledgment request after X duration from end of receiving the data frame, where the X duration is greater than or equal to a transmission delay on a backhaul link between APs, and the acknowledgment request is an acknowledgment request for the data frame.

It should be understood that a plurality of APs separately receive the data frame, and an AP 1 and an AP 2 perform data acknowledgment within the X duration from the end of receiving the data frame, to reply to the acknowledgment request sent by the STA after the X duration from the end of sending the data frame. The X duration is greater than or equal to the transmission delay on the backhaul link between the APs. The acknowledgment request is an acknowledgment request for the data frame.

In this embodiment of this application, AP-side uplink joint reception is completed without introducing data padding and wasting air interface resources.

In a first possible implementation of the second aspect, after the receiving, by an AP, an acknowledgment request, the method further includes: replying, by the AP, to the acknowledgment request.

In a second possible implementation of the second aspect, the data frame carries indication information used to indicate uplink joint reception.

In the second possible implementation of the second aspect, a possible implementation is that the indication information includes an RA field whose value is a MAC address of a virtual coordinated AP and that is in the data frame, or a 1-bit uplink joint reception indicator bit in the data frame.

In a third possible implementation of the second aspect, before the receiving, by an AP, a data frame, the method further includes: sending, by the AP, a beacon, where the beacon includes a MAC address of the AP, a MAC address of a virtual coordinated AP to which the AP belongs, and the transmission delay on the backhaul link between the APs.

According to a third aspect, an embodiment of this application provides a STA-side data acknowledgment apparatus, including:
a sending module, configured to send a data frame, where
the sending module is further configured to send an acknowledgment request; and
a processing module, configured to control the sending module to send the acknowledgment request after X duration from end of sending the data frame, where the X duration is greater than or equal to a transmission delay on a backhaul link between APs, and the acknowledgment request is an acknowledgment request for the data frame.In a first possible implementation of the third aspect, the data frame carries indication information used to indicate uplink joint reception.

In the first possible implementation of the third aspect, a possible implementation is that the indication information includes an RA field whose value is a MAC address of a virtual coordinated AP and that is in the data frame, or a 1-bit uplink joint reception indicator bit in the data frame.

In a second possible implementation of the third aspect, the STA-side data acknowledgment apparatus further includes: a receiving module, configured to receive a beacon, where the beacon includes a MAC address of an AP, a MAC address of a virtual coordinated AP to which the AP belongs, and the transmission delay on the backhaul link between the APs.

Based on the STA-side data acknowledgment apparatus in this embodiment of this application, AP-side uplink joint reception can be completed without introducing data padding and wasting air interface resources.

According to a fourth aspect, an embodiment of this application provides an AP-side data acknowledgment apparatus, including:
a receiving module, configured to receive a data frame, where
the receiving module is further configured to receive an acknowledgment request; and
a processing module, configured to control the receiving module to receive the acknowledgment request after X duration from end of receiving the data frame, where the X duration is greater than or equal to a transmission delay on a backhaul link between APs, and the acknowledgment request is an acknowledgment request for the data frame.

In a first possible implementation of the fourth aspect, the AP-side data acknowledgment apparatus further includes: a sending module, configured to reply to the acknowledgment request.

In a second possible implementation of the fourth aspect, the data frame carries indication information used to indicate uplink joint reception.

In the second possible implementation of the fourth aspect, a possible implementation is that the indication information includes an RA field whose value is a MAC address of a virtual coordinated AP and that is in the data frame, or a 1-bit uplink joint reception indicator bit in the data frame.

In a third possible implementation of the fourth aspect, the sending module is further configured to send a beacon, where the beacon includes a MAC address of an AP, a MAC address of a virtual coordinated AP to which the AP belongs, and the transmission delay on the backhaul link between the APs.

According to a fifth aspect, an embodiment of this application provides a STA-side data acknowledgment device. The data acknowledgment device includes a transceiver, a memory, and a processor. The transceiver, the memory, and the processor communicate with each other by using an internal connection path. The memory is configured to store an instruction. The processor is configured to execute the instruction stored in the memory, to control a receiver to receive a signal and control a transmitter to send a signal. When the processor executes the instruction stored in the memory, the processor in the data acknowledgment device is enabled to perform the method in the first aspect or any possible implementation of the first aspect.

According to a sixth aspect, an embodiment of this application provides an AP-side data acknowledgment device. The data acknowledgment device includes a transceiver, a memory, and a processor. The transceiver, the memory, and the processor communicate with each other by using an internal connection path. The memory is configured to store an instruction. The processor is configured to execute the instruction stored in the memory, to control a receiver to receive a signal and control a transmitter to send a signal. When the processor executes the instruction stored in the memory, the processor in the data acknowledgment device is enabled to perform the method in the second aspect or any possible implementation of the second aspect.

According to a seventh aspect, an embodiment of this application provides a computer readable medium, configured to store a computer program. The computer program includes an instruction used to perform the method in the first aspect or any possible implementation of the first aspect.

According to an eighth aspect, an embodiment of this application provides a computer readable medium, configured to store a computer program. The computer program includes an instruction used to perform the method in the second aspect or any possible implementation of the second aspect.

According to a ninth aspect, an embodiment of this application provides a computer program. The computer program includes an instruction used to perform the method in the first aspect or any possible implementation of the first aspect.

According to a tenth aspect, an embodiment of this application provides a computer program. The computer program includes an instruction used to perform the method in the second aspect or any possible implementation of the second aspect.

According to an eleventh aspect, an embodiment of this application provides a chip. The chip includes a processing circuit and a transceiver pin. The transceiver pin and the processor communicate with each other by using an internal connection. The processor performs the method in the first aspect or any possible implementation of the first aspect, to control a receive pin to receive a signal and control a transmit pin to send a signal.

According to a twelfth aspect, an embodiment of this application provides a chip. The chip includes a processing circuit and a transceiver pin. The transceiver pin and the processor communicate with each other by using an internal connection. The processor performs the method in the second aspect or any possible implementation of the second aspect, to control a receive pin to receive a signal and control a transmit pin to send a signal.

In the embodiments of this application, the STA sends the acknowledgment request after the X duration from the end of sending the data frame. The X duration is greater than or equal to the transmission delay on the backhaul link between the APs, so that acknowledgment of AP-side uplink joint reception is completed without wasting air interface resources.

### BRIEF DESCRIPTION OF DRAWINGS

FIG. 1 shows a communications system 200 to which the embodiments of this application are applied;
FIG. 2 is a flowchart of a method according to an embodiment of this application;
FIG. 3 shows a relationship between a virtual coordinated AP and a member AP according to an embodiment of this application;
FIG. 4 is a schematic diagram of a method according to an embodiment of this application;
FIG. 5 is a schematic diagram of another method according to an embodiment of this application;
FIG. 6 is a schematic diagram of another method according to an embodiment of this application;
FIG. 7 shows a structure of a data acknowledgment apparatus according to an embodiment of this application; and
FIG. 8 is a structural diagram of a possible product form of a data acknowledgment apparatus according to an embodiment of this application.

### DESCRIPTION OF EMBODIMENTS

The following describes the technical solutions in the embodiments of this application with reference to the accompanying drawings in the embodiments of this application.

It should be understood that, the technical solutions of the embodiments of this application may be applied to various communications systems, for example, a Wi-Fi wireless communications system, a global system for mobile communications (global system of mobile communication, GSM) system, a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, a universal mobile telecommunications system (universal mobile telecommunication system, UMTS) system, a worldwide interoperability for microwave access (worldwide interoperability for microwave access, WiMAX) communications system, a future 5G communication system, another radio communications system that adopts radio access technology, and the like.

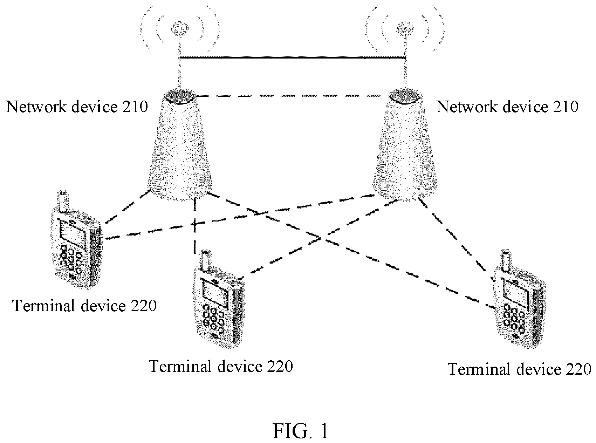

FIG. 1 shows a communications system 200 to which the embodiments of this application are applied. The communications system includes at least two network devices 210. The at least two network devices 210 may communicate with each other. The network device 210 may be a device that communicates with a terminal device, for example, a base station, a base station controller, or an access point. Each network device 210 may provide communication coverage for a particular geographic area, and may communicate with a terminal device (for example, UE) located in the coverage area (a cell). The network device 210 may be a base transceiver station (base transceiver station, BTS) in a GSM system or a code division multiple access (code division multiple access, CDMA) system, a nodeB (nodeB, NB) in a WCDMA system, an evolved nodeB (evolved nodeB, eNB or eNodeB) in an LTE system, or a radio controller in a cloud radio access network (cloud radio access network, CRAN). Alternatively, the network device may be an access point in a Wi-Fi wireless communications system, or the network device may be a relay station, a vehicle-mounted device, a wearable device, a network side device in a future 5G network, a network device in a future evolved public land mobile network (public land mobile network, PLMN), or the like.

The wireless communications system 200 further includes at least one terminal device 220 within a coverage range of the network device 210. The terminal device 220 may be mobile or fixed. The access terminal 220 may be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a future 5G network, or a terminal device in a future evolved public land mobile network (public land mobile network, PLMN).

FIG. 1 shows an example of two network devices and three terminal devices. Optionally, the communications system 200 may include a plurality of network devices, and another quantity of terminal devices may be included in a coverage range of each network device. This is not limited in this embodiment of this application.

The following describes the method and the product in the embodiments of this application by using an example in which the network device is an access point in a Wi-Fi wireless communications system and the terminal device is a station in the Wi-Fi wireless communications system. However, it should be understood that the method and the product in the embodiments of this application are not limited to the access point and the station in the Wi-Fi wireless communications system. The method and the product in the embodiments of this application are applicable to various communication scenarios in which the method in the embodiments of this application can be used.

An access point (Access point) in a Wi-Fi wireless communications system is referred to as an AP for short, and a station (Station) in a Wi-Fi wireless communications system is referred to as a STA for short.

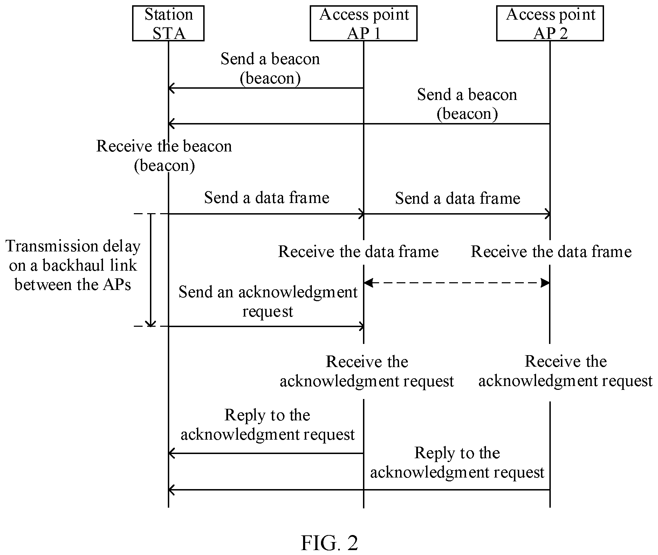

FIG. 2 is a flowchart of a method according to an embodiment of this application. FIG. 2 shows an example of two APs and one STA. However, it should be understood that the method in this embodiment of this application is applicable to a communications system including a plurality of APs and a plurality of STAs. This is not limited in this embodiment of this application.

As shown in FIG. 2, the data acknowledgment method includes the following steps:
S301. An AP 1 sends a beacon, where the beacon includes a MAC address of the AP 1, a MAC address of a virtual coordinated AP to which the AP 1 belongs, and a transmission delay on a backhaul link between APs.
S301. An AP 2 sends a beacon, where the beacon includes a MAC address of the AP 2, a MAC address of a virtual coordinated AP to which the AP 2 belongs, and a transmission delay on a backhaul link between APs.
In S301, the AP 1/AP 2 may send the beacon in a broadcast manner. The APs may respectively send the beacons, or may simultaneously send the beacons. The APs simultaneously send the beacons, to increase a probability that an edge STA in a coverage area of the virtual coordinated AP correctly receives the beacon.

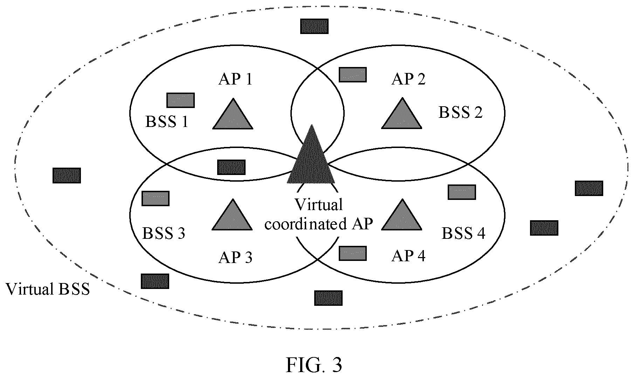

As shown in FIG. 3, a relationship between a virtual coordinated AP and a member AP is as follows: defining a virtual coordinated AP, allocating a virtual MAC address to the virtual coordinated AP, and configuring a member AP for the virtual coordinated AP. For example, as shown in FIG. 3, an AP 1, an AP 2, an AP 3, and an AP 4 are member APs of the virtual coordinated AP. In other words, the AP 1, the AP 2, the AP 3, and the AP 4 belong to the same virtual coordinated AP.

S302. A STA receives the beacons.

In S302, the STA receives the beacon sent by the AP 1, and the STA receives the beacon sent by the AP 2. In this way, the STA obtains the MAC address of the AP 1, the MAC address of the virtual coordinated AP to which the AP 1 belongs, the MAC address of the AP 2, the MAC address of the virtual coordinated AP to which the AP 2 belongs, and the transmission delay on the backhaul link between the APs. Therefore, the STA can obtain a belonging relationship between each AP and the virtual coordinated AP. For example, if the MAC address of the virtual coordinated AP to which the AP 1 belongs is the same as the MAC address of the virtual coordinated AP to which the AP 2 belongs, the AP 1 and the AP 2 are member APs of the same virtual coordinated AP.

S303. The STA sends a data frame, where the data frame carries indication information used to indicate uplink joint reception.

In step S303, the STA needs to send the data frame to the AP 1 and the AP 2. For example, the STA sends the data frame to the AP 1 and the AP 2 in a broadcast manner. Certainly, a sending manner of the STA is not limited in this embodiment of this application, as long as the STA can send the data frame to the AP 1 and the AP 2.

In step S303, the STA sends the data frame after receiving the beacons. The data frame includes indication information used to indicate whether the AP 1 and the AP 2 need to jointly receive the data frame. The indication information includes an RA field whose value is a MAC address of a virtual coordinated AP and that is in the data frame, or a 1-bit uplink joint reception indication bit in the data frame.

S304. The AP 1 receives the data frame.

S304. The AP 2 receives the data frame.

In step S304, the AP 1 and the AP 2 determine based on the indication information in the received data frame whether to receive the data frame. If the value of the RA field in the data frame is a MAC address of a virtual coordinated AP, the AP 1 determines whether the MAC address of the virtual coordinated AP is the MAC address of the virtual coordinated AP to which the AP 1 belongs. If the MAC address of the virtual coordinated AP is the MAC address of the virtual coordinated AP to which the AP 1 belongs, the AP 1 receives the data frame. A case of the AP 2 is similar to that of the AP 1. Details are not described herein again.

If the data frame includes the 1-bit uplink joint reception indication bit, the AP determines according to an uplink joint reception policy of the AP whether to receive the data frame. If the uplink joint reception policy of the AP is to receive the data frame, the AP 1 receives the data frame. A case of the AP 2 is similar to that of the AP 1. Details are not described herein again.

S305. The AP 1 and the AP 2 perform data acknowledgment.

In step 305, a time required for the data acknowledgment performed by the AP 1 and the AP 2 is the transmission delay on the backhaul link between the APs.

S306. The STA sends an acknowledgment request after X duration from end of sending the data frame, where the X duration is greater than or equal to the transmission delay on the backhaul link between the APs, and the acknowledgment request is an acknowledgment request for the data frame.

In step S306, the STA sends the acknowledgment request after the X duration from the end of sending the data frame in step S303. The X duration is greater than or equal to the transmission delay on the backhaul link between the APs. The acknowledgment request is an acknowledgment request for the data frame. In other words, the STA reserves duration of the transmission delay on the backhaul link between the APs. Therefore, the AP 1 and the AP 2 perform data acknowledgment, and the AP 1 or the AP 2 can reply to the acknowledgment request sent by the STA.

S307. The AP 1 replies to the acknowledgment request.

S307. The AP 2 replies to the acknowledgment request.

In S307, it should be understood that both the AP 1 and the AP 2 may reply to the acknowledgment request, or only the AP 1 or only the AP 2 may reply to the acknowledgment request. This is not limited in this embodiment of this application.

In S307, if the STA continuously sends data frames, the AP performs the following determining when replying to the acknowledgment request: If duration between receiving the data frame by the AP 1 and receiving the acknowledgment request by the AP 1 is greater than or equal to the transmission delay on the backhaul link between the APs, the AP 1 replies to the reception status of the data frame; or if duration between receiving the data frame by the AP 1 and receiving the acknowledgment request by the AP 1 is less than the transmission delay on the backhaul link between the APs, the AP 1 does not reply to a reception status of the data frame.

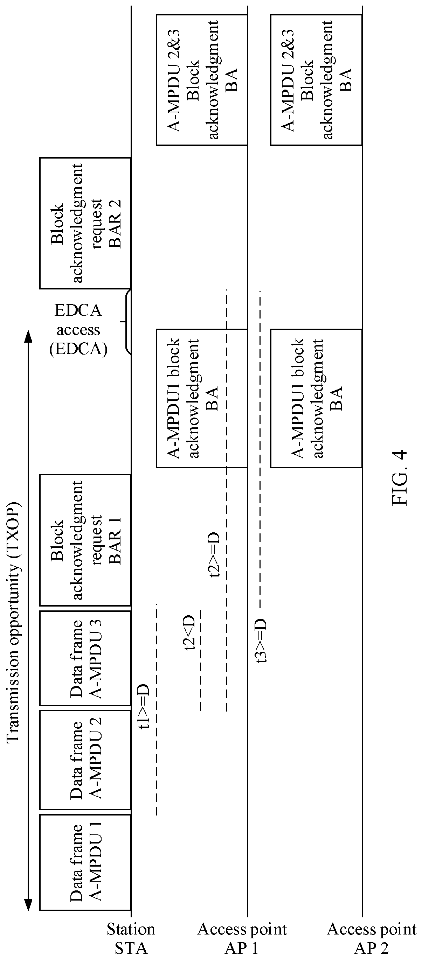

For example, as shown in FIG. 4, the STA continuously sends data frames A-MPDU 1, A-MPDU 2, and A-MPDU 3. The STA sends a block acknowledgment request BAR 1 after sending the data frame A-MPDU 3. The AP 1 performing the following determining when replying to the block acknowledgment request BAR:

If duration between receiving the data frame A-MPDU 1 by the AP 1 and receiving the block acknowledgment request BAR 1 by the AP 1 is greater than or equal to the transmission delay on the backhaul link between the APs, the AP 1 replies to a reception status of the data frame A-MPDU 1.

If duration between receiving the data frame A-MPDU 2 by the AP 1 and receiving the block acknowledgment request BAR 1 by the AP 1 is less than the transmission delay on the backhaul link between the APs, the AP 1 does not reply to a reception status of the data frame A-MPDU 2.

If duration between receiving the data frame A-MPDU 3 by the AP 1 and receiving the block acknowledgment request BAR 1 by the AP 1 is less than the transmission delay on the backhaul link between the APs, the AP 1 does not reply to a reception status of the data frame A-MPDU 3.

The AP 1 has not replied to the reception statuses of the data frame A-MPDU 2 and the data frame A-MPDU 3. Then, the STA contends for a channel again, and sends a block acknowledgment request BAR 2. The AP 1 performs the following determining when replying to the block acknowledgment request BAR 2:

If duration between receiving the data frame A-MPDU 2 by the AP 1 and receiving the block acknowledgment request BAR 2 by the AP 1 is greater than or equal to the transmission delay on the backhaul link between the APs, the AP 1 replies to the reception status of the data frame A-MPDU 2.

If duration between receiving the data frame A-MPDU 3 by the AP 1 and receiving the block acknowledgment request BAR 2 by the AP 1 is greater than or equal to the transmission delay on the backhaul link between the APs, the AP 1 replies to the reception status of the data frame A-MPDU 3.

In the method in this embodiment of this application, the STA sends the acknowledgment request after the X duration from the end of sending the data frame (herein, the X duration is greater than or equal to the transmission delay on the backhaul link between the APs), to complete AP-side uplink joint reception without introducing data padding and wasting air interface resources.

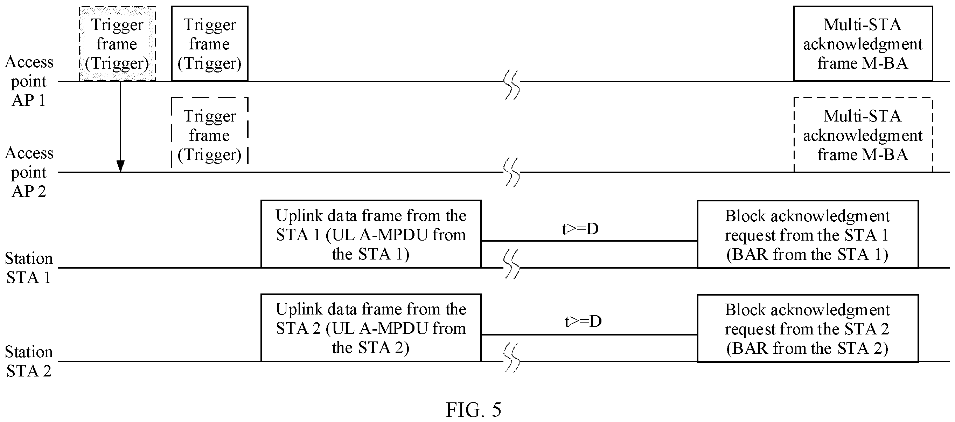

The method in this embodiment of this application is not limited to a single STA. The method in this embodiment of this application may be further applied to a multi-STA multi-AP communication scenario. For example, FIG. 5 is a schematic flowchart of a method in a multi-STA multi-AP communication scenario according to an embodiment of this application. Herein, a trigger frame is used to allocate resources to a STA 1 and a STA 2 for sending uplink data frames A-MPDU. It should be understood that the trigger may be sent by an AP 1, or may be sent by an AP 2, or may be sent by both an AP 1 and an AP 2. In FIG. 5, the AP 1 and the AP 2 both send the triggers. In FIG. 5, as a primary AP, the AP 1 transmits the trigger to another coordinated member AP such as the AP 2 by using a backhaul link. The AP 1 sends the trigger to request the STA 1 and the STA 2 to send uplink data to the AP 1. In addition, the AP 2 sends a trigger to request the STA 1 and the STA 2 to send uplink data to the AP 2. The STA 1 separately sends a data frame A-MPDU to the AP 1 and the AP 2 based on resource allocation indication information in the trigger. The STA 1 sends an acknowledgment request after X duration from end of sending the data frame A-MPDU. The X duration is greater than or equal to a transmission delay on a backhaul link between APs. The acknowledgment request is an acknowledgment request for the data frame A-MPDU. The STA 2 performs same actions as the STA 1. Details are not described herein again. The AP 1 and the AP 2 perform data acknowledgment on the data frame A-MPDU sent by the STA 1. The AP 1 replies, based on a reception status of the data frame sent by the STA 1, to the acknowledgment request sent by the STA 1. The AP 1 replies, based on a reception status of the data frame sent by the STA 2, to the acknowledgment request sent by the STA 2. The AP 1 may send a multi-STA acknowledgment frame (M-BA) to reply to both the acknowledgment requests sent by the STA 1 and the STA 2. The AP 2 performs same actions as the AP 1. Details are not described herein again. It should be understood that both the AP 1 and the AP 2 may reply to the acknowledgment request, or only the AP 1 or only the AP 2 may reply to the acknowledgment request. This is not limited in this embodiment of this application.

In the foregoing embodiment of this application, the STA sends the acknowledgment request after the X duration from the end of sending the data frame, and the AP 1 or the AP 2 replies to the acknowledgment request based on an AP-side uplink joint reception result. It should be understood that the AP 1 or the AP 2 may directly send an AP-side uplink joint reception status to the STA based on the AP-side uplink joint reception result instead of based on the acknowledgment request sent by the STA. In this acknowledgment mechanism, if the STA does not receive, within a time D from the end of sending the data frame, the AP-side uplink joint reception result that is sent by the AP side, the STA needs to retransmit the data frame. Herein, D is a time value that may be defined as a maximum transmission delay on the backhaul link between the APs, or may be defined as a sum of a guard period and a maximum transmission delay on the backhaul link between the APs.

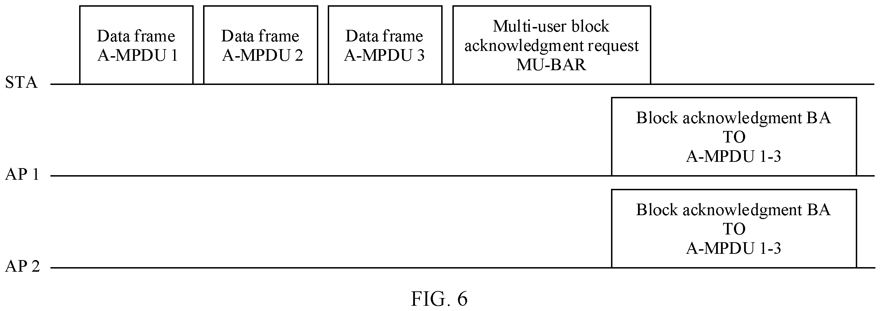

In another embodiment of this application, the STA may immediately send the acknowledgment request after sending the data frame. The acknowledgment request includes indication information that instructs the AP 1 and the AP 2 to separately reply to the acknowledgment request. For example, as shown in FIG. 6, after sending the data frame A-MPDU 3, the STA immediately sends a multi-user block request MU-BAR. Herein, an RA field of the MU-BAR is set to a broadcast address, and the MU-BAR includes two pieces of User Info that are used to instruct the AP 1 and the AP 2 to separately reply to the acknowledgment request. After receiving the MU-BAR frame, the AP 1 and the AP 2 separately reply with a BA frame after an SIFS based on the reception statuses. It should be understood that the multi-user block request MU-BAR and the data frame A-MPDU 1-3 may be alternatively aggregated into one frame. This is not limited in this embodiment of this application. It should be further understood that the method in this embodiment of this application is not limited to a single STA, and the method in this embodiment of this application may be further applicable to a multi-STA multi-AP communication scenario. An uplink data frame joint reception method for each STA and a plurality of APs in the multi-STA multi-AP scenario is the same as an uplink data frame joint reception method for a single STA and a plurality of APs shown in FIG. 6. Details are not described herein again.

The embodiments of this application further provide data acknowledgment apparatuses, including a STA-side data acknowledgment apparatus and an AP-side data acknowledgment apparatus. It should be understood that the STA-side data acknowledgment apparatus has any function of the STA in the foregoing methods, and the AP-side data acknowledgment apparatus has any function of the AP in the foregoing methods.

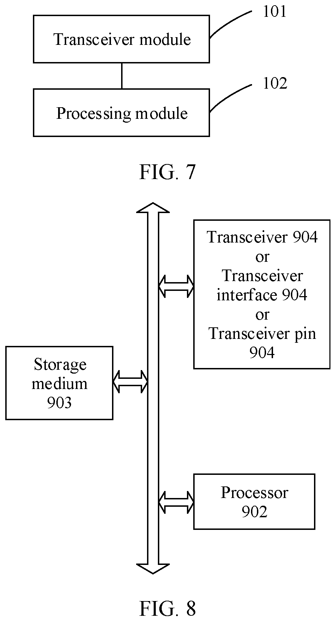

FIG. 7 shows structures of the data acknowledgment apparatuses according to the embodiments of this application, including a structure of the STA-side data acknowledgment apparatus and a structure of the AP-side data acknowledgment apparatus.

As shown in FIG. 7, an embodiment of this application provides a STA-side data acknowledgment apparatus, including:
a sending module 101, configured to send a data frame, where
the sending module 101 is further configured to send an acknowledgment request; and
a processing module, configured to control the sending module to send the acknowledgment request after X duration from end of sending the data frame, where the X duration is greater than or equal to a transmission delay on a backhaul link between APs, and the acknowledgment request is an acknowledgment request for the data frame, and the indication information includes an RA field whose value is a MAC address of a virtual coordinated AP and that is in the data frame, or a 1-bit uplink joint reception indicator bit in the data frame.

The STA-side data acknowledgment apparatus further includes: a receiving module 101, configured to receive a beacon, where the beacon includes a MAC address of an AP, a MAC address of a virtual coordinated AP to which the AP belongs, and the transmission delay on the backhaul link between the APs.

Based on the STA-side data acknowledgment apparatus in this embodiment of this application, AP-side uplink joint reception can be completed without introducing data padding and wasting air interface resources.

As shown in FIG. 7, an embodiment of this application provides an AP-side data acknowledgment apparatus, including:
a receiving module 101, configured to receive a data packet, where
the receiving module 101 is further configured to receive an acknowledgment request; and
a processing module, configured to control the receiving module to receive the acknowledgment request after X duration from end of receiving the data frame, where the X duration is greater than or equal to a transmission delay on a backhaul link between APs, and the acknowledgment request is an acknowledgment request for the data frame; and
the AP-side data acknowledgment apparatus further includes: a sending module, configured to reply to the acknowledgment request.

The data frame carries indication information used to indicate uplink joint reception. The indication information includes an RA field whose value is a MAC address of a virtual coordinated AP and that is in the data frame, or a 1-bit uplink joint reception indicator bit in the data frame.

The sending module 101 is further configured to send a beacon, where the beacon includes a MAC address of an AP, a MAC address of a virtual coordinated AP to which the AP belongs, and the transmission delay on the backhaul link between the APs.

Based on the AP-side data acknowledgment apparatus in this embodiment of this application, AP-side uplink joint reception can be completed without introducing data padding and wasting air interface resources.

The data acknowledgment apparatuses provided in the embodiments of this application include the STA-side data acknowledgment apparatus and the AP-side data acknowledgment apparatus, and may be implemented in a plurality of product forms. For example, the data acknowledgment apparatus may be configured as a general processing system. For example, the data acknowledgment apparatus may be implemented by a general bus architecture. For example, the data acknowledgment apparatus may be implemented by an ASIC (application-specific integrated circuit), and the like. The following provides several possible product forms of the data acknowledgment apparatus in the embodiments of this application. It should be understood that the following is merely an example, and the possible product forms in the embodiments of this application are not limited thereto.

FIG. 8 is a structural diagram of possible product forms of the data acknowledgment apparatus according to an embodiment of this application.

In a possible product form, the data acknowledgment apparatus may be a data acknowledgment device, and the data acknowledgment device includes a processor 902 and a transceiver 904. Optionally, the data acknowledgment apparatus may further include a storage medium 903.

In another possible product form, the data acknowledgment apparatus may be a data acknowledgment board, and the data acknowledgment board includes a processor 902 and a transceiver 904/transceiver interface 904. Optionally, the data acknowledgment apparatus may further include a storage medium 903.

In another possible product form, the data acknowledgment apparatus is also implemented by a general purpose processor, that is, implemented by a commonly called chip. The general purpose processor includes a processor 902 and a transceiver interface 904/transceiver pin 904. Optionally, the general purpose processor may further include a storage medium 903.

In another possible product form, the data acknowledgment apparatus may also be implemented by using the following components: one or more FPGAs (field programmable gate arrays), a PLD (programmable logic device), a controller, a state machine, a gate logic, a discrete hardware component, any other suitable circuit, or any combination of circuits that can perform various functions described in this application.

It should be understood that the term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

A person of ordinary skill in the art may be aware that, in combination with the examples described in the embodiments disclosed in this specification, method steps and modules can be implemented by electronic hardware, computer software, or a combination thereof. To clearly describe the interchangeability between the hardware and the software, the foregoing has generally described steps and composition of each embodiment according to functions. Whether the functions are performed by hardware or software depends on particular applications and design constraint conditions of the technical solutions. A person of ordinary skill in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and module, reference can be made to a corresponding process in the foregoing method embodiments. Details are not described herein again.

In the several embodiments provided in this application, it should be understood that the disclosed system, apparatus, and method may be implemented in other manners. For example, the described apparatus embodiment is merely used as an example. For example, the module division is merely logical function division and may be other division in actual implementation. For example, a plurality of modules or components may be combined or integrated into another system, or some features may be ignored or not performed. In addition, the displayed or discussed mutual couplings or direct couplings or communications connections may be implemented by using some interfaces. Indirect couplings or communications connections between the apparatuses or modules may be electrical connections, mechanical connections, or connections in other forms.

The modules described as separate parts may or may not be physically separate, and parts displayed as modules may or may not be physical modules, may be located in one position, or may be distributed on a plurality of network modules. Some or all the modules may be selected according to actual needs to achieve the objectives of the solutions in the embodiments of this application.

In addition, functional modules in the embodiments of this application may be integrated into one processing module, or each of the modules may exist alone physically, or two or more modules may be integrated into one module. The integrated module may be implemented in a form of hardware, or may be implemented in a form of a software functional module.

When the integrated module is implemented in the form of a software functional module and sold or used as an independent product, the integrated unit may be stored in a computer-readable storage medium. Based on such an understanding, the technical solutions of this application essentially, or the part contributing to the prior art, or all or some of the technical solutions may be implemented in the form of a software product. The software product is stored in a storage medium and includes several instructions for instructing a computer device (which may be a personal computer, a server, or a network device) to perform all or some of the steps of the methods described in the embodiments of this application. The foregoing storage medium includes: any medium that can store program code, such as a USB flash drive, a removable hard disk, a read-only memory (read-only memory, ROM), a random access memory (random access memory, RAM), a magnetic disk, or an optical disc.

Further embodiments of the present invention are provided in the following. It should be noted that the numbering used in the following section does not necessarily need to comply with the numbering used in the previous sections.
Embodiment 1. A data acknowledgment method, comprising:
   sending, by a STA, a data frame; and
   sending, by the STA, an acknowledgment request after X duration from end of sending the data frame, wherein the X duration is greater than or equal to a transmission delay on a backhaul link between APs, and the acknowledgment request is an acknowledgment request for the data frame.
Embodiment 2. The method according to embodiment 1, wherein the data frame carries indication information used to indicate uplink joint reception.
Embodiment 3. The method according to embodiment 2, wherein the indication information comprises an RA field whose value is a MAC address of a virtual coordinated AP and that is in the data frame, or a 1-bit uplink joint reception indicator bit in the data frame.
Embodiment 4. The method according to any one of embodiments 1 to 3, wherein before the sending, by a STA, a data frame, the method further comprises: receiving, by the STA, a beacon, wherein the beacon comprises a MAC address of an AP, a MAC address of a virtual coordinated AP to which the AP belongs, and the transmission delay on the backhaul link between the APs.
Embodiment 5. A data acknowledgment method, comprising:
   receiving, by an AP, a data frame; and
   receiving, by the AP, an acknowledgment request after X duration from end of receiving the data frame, wherein the X duration is greater than or equal to a transmission delay on a backhaul link between APs, and the acknowledgment request is an acknowledgment request for the data frame.
Embodiment 6. The method according to embodiment 5, wherein after the receiving, by an AP, an acknowledgment request, the method further comprises: replying, by the AP, to the acknowledgment request.
Embodiment 7. The method according to embodiment 5 or 6, wherein the data frame carries indication information used to indicate uplink joint reception.
Embodiment 8. The method according to embodiment 7, wherein the indication information comprises an RA field whose value is a MAC address of a virtual coordinated AP and that is in the data frame, or a 1-bit uplink joint reception indicator bit in the data frame.
Embodiment 9. The method according to any one of embodiments 5 to 8, wherein before the receiving, by an AP, a data frame, the method further comprises: sending, by the AP, a beacon, wherein the beacon comprises a MAC address of the AP, a MAC address of a virtual coordinated AP to which the AP belongs, and the transmission delay on the backhaul link between the APs.
Embodiment 10. A STA-side data acknowledgment apparatus, comprising:
   a sending module, configured to send a data frame, where
   the sending module is further configured to send an acknowledgment request; and
   a processing module, configured to control the sending module to send the acknowledgment request after X duration from end of sending the data frame, wherein the X duration is greater than or equal to a transmission delay on a backhaul link between APs, and the acknowledgment request is an acknowledgment request for the data frame.
Embodiment 11. The STA-side data acknowledgment apparatus according to embodiment 10, wherein the data frame carries indication information used to indicate uplink joint reception.
Embodiment 12. The STA-side data acknowledgment apparatus according to embodiment 11, wherein the indication information comprises an RA field whose value is a MAC address of a virtual coordinated AP and that is in the data frame, or a 1-bit uplink joint reception indicator bit in the data frame.
Embodiment 13. The STA-side data acknowledgment apparatus according to any one of embodiments 10 to 12, wherein the STA-side data acknowledgment apparatus further comprises: a receiving module, configured to receive a beacon, wherein the beacon comprises a MAC address of an AP, a MAC address of a virtual coordinated AP to which the AP belongs, and the transmission delay on the backhaul link between the APs.
Embodiment 14. An AP-side data acknowledgment apparatus, comprising:
   a receiving module, configured to receive a data packet, where
   the receiving module is further configured to receive an acknowledgment request; and
   a processing module, configured to control the receiving module to receive the acknowledgment request after X duration from end of receiving the data frame, wherein the X duration is greater than or equal to a transmission delay on a backhaul link between APs, and the acknowledgment request is an acknowledgment request for the data frame.
Embodiment 15. The AP-side data acknowledgment apparatus according to embodiment 14, wherein the AP-side data acknowledgment apparatus further comprises: a sending module, configured to reply to the acknowledgment request.
Embodiment 16. The AP-side data acknowledgment apparatus according to embodiment 14 or 15, wherein the data frame carries indication information used to indicate uplink joint reception.
Embodiment 17. The AP-side data acknowledgment apparatus according to embodiment 16, wherein the indication information comprises an RA field whose value is a MAC address of a virtual coordinated AP and that is in the data frame, or a 1-bit uplink joint reception indicator bit in the data frame.
Embodiment 18. The AP-side data acknowledgment apparatus according to any one of embodiments 15 to 17, wherein the sending module is further configured to send a beacon, wherein the beacon comprises a MAC address of an AP, a MAC address of a virtual coordinated AP to which the AP belongs, and the transmission delay on the backhaul link between the APs.
Embodiment 19. A data acknowledgment device, wherein the data acknowledgment device comprises a processor, a transceiver, and a memory, the memory is configured to store an instruction, and the processor is configured to execute the instruction in the memory to perform the method according to any one of embodiments 1 to 9.
Embodiment 20. A computer-readable storage medium, wherein the computer-readable storage medium stores a computer program, and when the computer program is run on a computer, the computer is enabled to perform the method according to any one of embodiments 1 to 9.
Embodiment 21. A computer program product, wherein the computer program product comprises an instruction used to perform the method according to any one of embodiments 1 to 9.
Embodiment 22. A chip, wherein the chip comprises a processing circuit and a transceiver pin, the transceiver pin and the processing circuit communicate with each other by using an internal connection path, and the processing circuit is configured to control the chip to perform the method according to any one of embodiments 1 to 9.
Embodiment 23. An apparatus, configured to implement the method according to any one of embodiments 1 to 9.

The foregoing descriptions are merely specific embodiments of this application, but are not intended to limit the protection scope of this application. Any modification or replacement readily figured out by a person skilled in the art within the technical scope disclosed in this application shall fall within the protection scope of this application. Therefore, the protection scope of this application shall be subject to the protection scope of the claims.

## Claims

1. A data acknowledgment method, comprising:
receiving a data frame;
receiving an acknowledgment request after X duration from end of receiving the data frame, wherein the X duration is greater than or equal to a transmission delay on a backhaul link between APs, and the acknowledgment request is an acknowledgment request for the data frame; and
if duration between receiving the data frame and receiving the acknowledgment request is greater than or equal to the transmission delay on the backhaul link between the APs, replying to the acknowledgment request; or
if duration between receiving the data frame and receiving the acknowledgment request is less than the transmission delay on the backhaul link between the APs, not replying to the acknowledgment request.

2. The method according to claim 1, before receiving a data frame, the method further comprising:
sending a trigger frame, the trigger frame is used to allocate resource to a STA for sending the data frame.

3. The method according to claim 1 or 2, wherein the data frame carries indication information used to indicate uplink joint reception.

4. The method according to claim 3, wherein the indication information comprises an RA field whose value is a MAC address of a virtual coordinated AP and that is in the data frame, or a 1-bit uplink joint reception indicator bit in the data frame.

5. The method according to any one of claims 1 to 4, wherein before the receiving, by an AP, a data frame, the method further comprises: sending, by the AP, a beacon, wherein the beacon comprises a MAC address of the AP, a MAC address of a virtual coordinated AP to which the AP belongs, and the transmission delay on the backhaul link between the APs.

6. A data acknowledgment apparatus, comprising:
a receiving unit, configured to receive a data frame;
receiving an acknowledgment request after X duration from end of receiving the data frame, wherein the X duration is greater than or equal to a transmission delay on a backhaul link between APs, and the acknowledgment request is an acknowledgment request for the data frame; and
if duration between receiving the data frame and receiving the acknowledgment request is greater than or equal to the transmission delay on the backhaul link between the APs, replying to the acknowledgment request; or
if duration between receiving the data frame and receiving the acknowledgment request is less than the transmission delay on the backhaul link between the APs, not replying to the acknowledgment request.

7. The apparatus according to claim 6, before receiving a data frame, the apparatus further comprising:
sending a trigger frame, the trigger frame is used to allocate resource to a STA for sending the data frame.

8. The apparatus according to claim 6 or 7, wherein the data frame carries indication information used to indicate uplink joint reception.

9. The apparatus according to claim 8, wherein the indication information comprises an RA field whose value is a MAC address of a virtual coordinated AP and that is in the data frame, or a 1-bit uplink joint reception indicator bit in the data frame.

10. The apparatus according to any one of claim 6 to 9, wherein before the receiving, by an AP, a data frame, the apparatus further comprises: sending, by the AP, a beacon, wherein the beacon comprises a MAC address of the AP, a MAC address of a virtual coordinated AP to which the AP belongs, and the transmission delay on the backhaul link between the APs.

11. A computer-readable storage medium, wherein the computer-readable storage medium stores a computer program, and when the computer program is run on a computer, the computer is enabled to perform the method according to any one of claims 1 to 5.

12. A computer program product, wherein the computer program product comprises an instruction used to perform the method according to any one of claims 1 to 5.
